(19) Europäisches Patentamt
European Patent Office
Office européen des brevets

(11) EP 3 392 323 A1

(12) DEMANDE DE BREVET EUROPEEN

(43) Date de publication:
**24.10.2018 Bulletin 2018/43**

(51) Int Cl.:
***C09K 5/04*** *(2006.01)* ***C10M 171/00*** *(2006.01)*

(21) Numéro de dépôt: **18170764.7**

(22) Date de dépôt: **10.08.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2010 FR 1057483**

(62) Numéro(s) de document de la (des) demande(s) initiale(s) en application de l'article 76 CBE:
**11177053.3 / 2 431 442**

(71) Demandeur: **ARKEMA FRANCE**
**92700 Colombes (FR)**

(72) Inventeurs:
- **BERGER (BOUSSAND), Béatrice**
**69110 SAINTE FOY LES LYON (FR)**
- **RACHED, Wissam**
**69630 CHAPONOST (FR)**

(74) Mandataire: **Dang, Doris**
**ARKEMA France**
**Département Propriété Industrielle**
**420, rue d'Estienne d'Orves**
**92705 Colombes Cedex (FR)**

Remarques:
Cette demande a été déposée le 04-05-2018 comme demande divisionnaire de la demande mentionnée sous le code INID 62.

# (54) COMPOSITION A BASE DE 1,3,3,3-TETRAFLUOROPROPENE

(57) La présente demande a pour objet une composition comprenant un lubrifiant à base d'esters de polyol (POE) ou PVE et un fluide frigorigène F comprenant de 1 à 99 % en poids du trans-1,3,3,3-tetrafluoropropène (trans HFO-1234ze) et de 1 à 99 % en poids du 1,1,1,3-tetrafluoroéthane. Elle a également pour objet l'utilisation de ladite composition en réfrigération, climatisation et pompe à chaleur.

EP 3 392 323 A1

## Description

La présente invention concerne une composition renfermant du trans-1,3,3,3-tetrafluoropropène et du 1,1,1,3-tetrafluoroéthane et au moins un lubrifiant, apte à être utilisée dans la réfrigération, climatisation et pompe à chaleur.

Les problèmes posés par les substances appauvrissant la couche d'ozone atmosphérique ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la climatisation a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1430) est considéré comme ayant un pouvoir de réchauffement élevé. La contribution à l'effet de serre d'un fluide est quantifiée par un critère, le GWP (Global Warming Potential) qui résume le pouvoir de réchauffement en prenant une valeur de référence de 1 pour le dioxyde de carbone.

Les hydrofluorooléfines (HFO) ont un pouvoir de réchauffement peu élevé et donc répondent aux objectifs fixés par le protocole de Kyoto. Le document JP 4-110388 divulgue les hydrofluoropropènes comme agent de transfert de chaleur.

Dans le domaine industriel, les machines frigorifiques les plus employées sont basées sur le refroidissement par évaporation d'un fluide frigorigène liquide. Après vaporisation, le fluide est compressé puis refroidi afin de repasser à l'état liquide et poursuivre ainsi le cycle.

Les compresseurs frigorifiques utilisés sont du type alternatif, scroll, centrifuges ou à vis. En général, la lubrification interne des compresseurs est indispensable pour réduire l'usure et l'échauffement des organes en mouvement, parfaire leur étanchéité et les protéger contre la corrosion.

Outre les bonnes propriétés d'agent de transfert de chaleur, pour qu'un fluide frigorigène soit accepté commercialement il doit notamment présenter une stabilité thermique et une compatibilité avec les lubrifiants. En effet, il est hautement souhaitable que le fluide frigorigène soit compatible avec le lubrifiant utilisé dans le compresseur, présent dans la majorité des systèmes de réfrigération. Cette association fluide frigorigène et lubrifiant est importante pour la mise en oeuvre et l'efficacité du système de réfrigération, notamment le lubrifiant doit être suffisamment soluble ou miscible dans le fluide frigorigène dans tout l'intervalle de température de fonctionnement.

C'est ainsi que les polyalkylènes glycol (PAG) ont été mis au point comme lubrifiants du HFC-134a dans la climatisation automobile.

Des essais de miscibilité du 1,1,3,3,3-pentafluoropropène et du 1,3,3,3-tetrafluoropropène avec des lubrifiants ont été décrits à l'exemple 2 du document WO 2004/037913. Des essais de compatibilité ont également été décrits à l'exemple 3 avec le polyalkylène glycol. Toutefois, ces essais ne précisent pas la nature de l'isomère du 1,3,3,3-tetrafluoropropène.

Par ailleurs, le document WO 2005/108522 divulgue une composition azéotropique du trans-1,3,3,3-tetrafluoropropène et du 1,1,1,3-tetrafluoroéthane.

Tout récemment, le 2,3,3,3-tetrafluoropropène a été choisi comme fluide frigorigène pour remplacer le HFC-134a dans la climatisation automobile.

La demanderesse a maintenant mis au point un couple fluide frigorigène et lubrifiant, apte à être utilisée en réfrigération, climatisation et pompe à chaleur.

La présente demande a donc pour objet une composition comprenant au moins un lubrifiant à base d'esters de polyol (POE) ou de polyvinyléther (PVE) et un fluide frigorigène F comprenant de 1 à 99 % en poids du trans-1,3,3,3-tetrafluoropropène (trans HFO-1234ze) et de 1 à 99 % en poids du 1,1,1,3-tetrafluoroéthane.

De préférence, la composition selon la présente invention comprend au moins un lubrifiant à base d'esters de polyol (POE) ou de polyvinyléther (PVE) et un fluide frigorigène F comprenant de 5 à 95 % en poids du trans-1,3,3,3-tetrafluoropropène (trans HFO-1234ze) et de 5 à 95 % en poids du 1,1,1,3-tetrafluoroéthane.

La composition particulièrement préférée comprend au moins un lubrifiant à base d'esters de polyol (POE) ou de polyvinyléther (PVE) et un fluide frigorigène F comprenant de 30 à 91 % en poids du trans-1,3,3,3-tetrafluoropropène (trans HFO-1234ze) et de 9 à 70 % en poids du 1,1,1,3-tetrafluoroéthane.

Le fluide F peut comprendre en outre d'autres hydrofluorocarbures.

Le fluide F présente l'avantage d'être plus performant que le trans-HFO-1234ze et en outre la stabilité du fluide en présence du POE ou PVE est supérieure par rapport à celle du trans-HFO-1234ze en présence du PAG.

Les esters de polyol sont obtenus par réaction d'un polyol (un alcool contenant au moins 2 groupements hydroxyles, -OH) avec un acide carboxylique monofonctionnel ou plurifonctionnel ou avec un mélange d'acides carboxyliques monofonctionnels. L'eau formée lors de cette réaction est éliminée pour éviter la réaction inverse (c-à-d l'hydrolyse).

Selon la présente invention, les polyols préférés sont ceux ayant un squelette de néopentyle comme le néopentyle glycol, le triméthylol propane, le pentaerythritol et le dipentaerythritol; le pentaerythritol est le polyol préféré.
Les acides carboxyliques peuvent comprendre de 2 à 15 atomes de carbone, le squelette carboné pouvant être linéaire ou ramifié. On peut citer notamment l'acide n-pentanoïque, l'acide n-hexanoïque, l'acide n-heptanoïque, l'acide n-octanoïque, l'acide 2-éthylhexanoïque, l'acide 2,2-diméthylpentanoïque, l'acide 3,5,5-trimethylhexanoïque, l'acide adipique, l'acide succinique et leurs mélanges.

Certaines fonctions alcool ne sont pas estérifiées, cependant leur proportion reste faible. Ainsi, les POE peuvent comprendre entre 0 et 5 % molaire relatif de motifs $CH_2$-OH par rapport aux motifs $-CH_2-O-(C=O)-$.

Les lubrifiants POE préférés sont ceux ayant une viscosité de 1 à 1000 centiStokes (cSt) à 40°C, de préférence de 10 à 200 cSt, et avantageusement de 30 à 80 cSt.

Les huiles polyvinyléther (PVE) sont de préférence des copolymères des 2 motifs suivants :

Motif 1 :

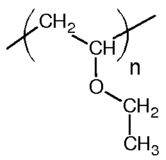

Motif 2 :

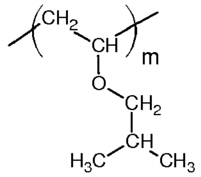

Les propriétés de l'huile (viscosité, solubilité du fluide et miscibilité avec le fluide notamment) peuvent être ajustées en faisant varier le ratio m/n et la somme m+n. Les huiles PVE préférées sont celles ayant 50 à 95 % en poids de motifs 1.
Selon un mode préféré de l'invention le lubrifiant représente(nt) entre 10 et 50 %, inclus, en poids de la composition.

Le fluide F peut également comprendre des additifs tels que les composés odorants.

La présente invention a également pour objet l'utilisation de la composition précitée dans la réfrigération, notamment la réfrigération domestique, commerciale, chambres froides, industrie alimentaire, procédé, transport frigorifique (camions, bateaux) ; la climatisation, notamment climatisation domestique, commerciale ou industrielle, où les équipements utilisés sont soit des chillers, soit des équipements à expansion directe ; et pompe à chaleur, notamment pompe à chaleur moyenne et haute température

Grâce à leur faible glissement de température (ou glide), les compositions selon la présente invention peuvent être utilisées aussi bien dans des installations avec évaporateurs à détente sèche qu'avec des évaporateurs fonctionnant en régime noyé.

PARTIE EXPERIMENTALE

Les essais de stabilité thermique sont effectués selon la norme ASHRAE 97-2007: "sealed glass tube method to test the chemical stability of materials for use within refrigerant systems".

Les conditions de test sont les suivantes :

masse de fluide : 2,2 g
masse de lubrifiant : 5 g
température : 200°C
durée : 14 jours

Le lubrifiant est introduit dans un tube en verre de 42,2 ml. Le tube est ensuite tiré sous vide puis le fluide F y est ajouté. Le tube est alors soudé pour le fermer et placé dans une étuve à 200°C pendant 14 jours.

En fin de test, différentes analyses sont réalisées :

- la phase gaz est récupérée pour être analysée par chromatographie phase gazeuse : les principales impuretés ont été identifiées par GC/MS (chromatographie phase gazeuse couplée spectrométrie de masse). On peut ainsi regrouper les impuretés venant du fluide F et celles venant du lubrifiant.
- le lubrifiant est analysé : couleur (par spectrocolorimétrie, Labomat DR Lange LICO220 Modèle MLG131), humidité (par coulométrie Karl Fischer, Mettler DL37) et indice d'acide (par dosage avec de la potasse méthanolique 0,01N).

3 lubrifiants commerciaux ont été testés : l'huile PAG ND8, l'huile POE Ze-GLES RB68 et l'huile PVE FVC 68D.

| | PAG ND8 | | POE Ze-GLES RB68 | | PVE FVC 68D |
|---|---|---|---|---|---|
| Fluide | HFC-134a | Trans-HFO-1234ze | HFC-134a | Trans-HFO-1234ze | Trans-HFO-1234ze |
| Sous-produits dans la phase gaz :<br>➢ à partir du fluide<br>➢ à partir du lubrifiant | <br>100 ppm<br>1,5 % | <br>4000 ppm + 6000 ppm (HFO-1234yf)<br>2% | <br>100 ppm<br>500 ppm | <br>500ppm +1500ppm (HFO-1234yf)<br>800 ppm | <br>3 % + 1800ppm de (HFO-1234yf)<br>2% |
| Analyse du lubrifiant :<br>➢ couleur<br>➢ humidité<br>➢ Indice d'acide | <br>400 Hazen<br>1200 ppm<br>1,5mg KOH/g | <br>17 Gardner<br>1100 ppm<br>>10mg KOH/g | <br>300 Hazen<br>160 ppm<br>0,3 mg KOH/g | <br>300 Hazen<br>500 ppm<br>0,6 mg KOH/g | <br>6 Gardner<br>500 ppm<br>1,1 mg KOH/g |

On constate le trans-HFO1234ze en présence du POE ou PVE améliore la stabilité du lubrifiant. En outre, en présence du POE la stabilité du fluide est également améliorée.

APPLICATIONS

Performance thermodynamique des systèmes utilisant les mélanges en questions

Outils de calcul

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données nécessaires pour chaque corps pur sont:
Température d'ébullition, Température et pression critique, la courbe de pression en fonction de la température à partir du point d'ébullition jusqu'au point critique, les densités liquide saturée et vapeur saturé en fonction de la température.

Les données sur les HFC sont publiées dans l'ASHRAE Handbook 2005 chapitre 20 et sont aussi disponible sous Refrop (Logiciel développé par NIST pour le calcul des propriétés des fluides frigorigènes)

Les données de la courbe température-pression des HFO sont mesurées par la méthode statique. La température et pression critique sont mesurées par un calorimètre C80 commercialisé par Setaram. Les densités, à saturation en fonction de la température, sont mesurées par la technologie du densimètre à tube vibrant développer par les laboratoires de l'école des Mines de Paris.

Coefficient d'interaction binaire:

L'équation RK-Soave utilise des coefficients d'interaction binaire pour représenter le comportement des produits en mélanges. Les coefficients sont calculés en fonction des données expérimentales d'équilibre liquide vapeur.

La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesII) en phase gazeuse utilisant un catharomètre (TCD).

HFC-134a / trans HFO-1234ze
Les mesures d'équilibre liquide vapeur sur le binaire HFC-134a / trans HFO-1234ze sont réalisées pour l'isotherme suivante : 20°C

Système à compression

Considérons un système à compression équipé d'un évaporateur, d'un condenseur, d'un échangeur liquide-vapeur (échangeur interne), d'un compresseur à vis et d'un détendeur.
Le système fonctionne avec 15°C de surchauffe et un échangeur interne entre les sorties du condenseur et de l'évaporateur.
Le rendement isentropique des compresseurs est fonction du taux de compression. Ce rendement est calculé suivant l'équation suivante:

$$\eta_{isen} = a - b(\tau - c)^2 - \frac{d}{\tau - e} \tag{1}$$

Pour un compresseur à vis, les constantes a, b, c, d et e de l'équation (1) du rendement isentropique sont calculées suivant les données types publiées dans le Handbook "Handbook of air conditioning and refrigeration, page 11.52".
Le coefficient de performance (COP) est défini, comme étant la puissance utile fournie par le système sur la puissance apportée ou consommée par le système.
Le coefficient de performance de Lorenz (COPLorenz) est un coefficient de performance de référence. Il est fonction de températures et est utilisé pour comparer les COP des différents fluides.
Le coefficient de performance de Lorenz est défini comme suit:

(Les températures T sont en K)

$$T_{moyenne}^{condenseur} = T_{entrée}^{condenseur} - T_{sortie}^{condenseur} \tag{2}$$

$$T_{moyenne}^{évaporateur} = T_{sortie}^{évaporateur} - T_{entrée}^{évaporateur} \tag{3}$$

Le COP de Lorenz dans le cas de l'air conditionnée et réfrigération:

$$COPlorenz = \frac{T_{moyenne}^{évaporateur}}{T_{moyenne}^{condenseur} - T_{moyenne}^{évaporateur}} \tag{4}$$

Le COP de Lorenz dans le cas de chauffage:

$$COPlorenz = \frac{T_{moyenne}^{condenseur}}{T_{moyenne}^{condenseur} - T_{moyenne}^{évaporateur}} \tag{5}$$

Pour chaque composition, le coefficient de performance du cycle de Lorenz est calculé en fonction des températures correspondantes
Le %COP/COPLorenz est le rapport du COP du système par rapport au COP du cycle de Lorenz correspondant.

Résultats en mode refroidissement

En mode refroidissement, le système à compression fonctionne entre une température d'évaporation de -5°C et une température de condensation de 50°C.
Les valeurs des constituants (HFC-134a, trans HFO-1234ze) pour chaque composition sont données en pourcentage en poids.

| Mode refroidissement | | Temp entrée évap (°C) | Temp sortie comp (°C) | T condensation (°C) | T entrée detendeur | evap P (bar) | cond P (bar) | Taux (p/p) | Glide | rendement comp | % CAP | % COP / COPLorenz |
|---|---|---|---|---|---|---|---|---|---|---|---|---|
| HFO-1234ze | | -5 | 73 | 50 | 42 | 1,8 | 10,0 | 5,6 | 0,00 | 74,8 | 100 | 54 |
| HFO-1234ze | HFC-134a | | | | | | | | | | | |
| 5 | 95 | -5 | 81 | 50 | 42 | 2,4 | 13,1 | 5,4 | 0,03 | 75,9 | 136 | 56 |
| 10 | 90 | -5 | 81 | 50 | 42 | 2,4 | 13,0 | 5,4 | 0,07 | 75,8 | 135 | 55 |
| 20 | 80 | -5 | 80 | 50 | 42 | 2,3 | 12,8 | 5,5 | 0,16 | 75,6 | 131 | 55 |
| 30 | 70 | -5 | 79 | 50 | 42 | 2,3 | 12,6 | 5,5 | 0,26 | 75,3 | 128 | 55 |
| 40 | 60 | -5 | 79 | 50 | 42 | 2,2 | 12,3 | 5,6 | 0,34 | 75,1 | 124 | 54 |
| 50 | 50 | -5 | 78 | 50 | 42 | 2,1 | 12,0 | 5,6 | 0,40 | 74,9 | 120 | 54 |
| 60 | 40 | -5 | 78 | 50 | 42 | 2,1 | 11,7 | 5,7 | 0,44 | 74,7 | 116 | 54 |
| 70 | 30 | -5 | 77 | 50 | 42 | 2,0 | 11,3 | 5,7 | 0,43 | 74,6 | 112 | 54 |
| 80 | 20 | -5 | 76 | 50 | 42 | 1,9 | 10,9 | 5,7 | 0,37 | 74,5 | 108 | 54 |
| 90 | 10 | -5 | 75 | 50 | 42 | 1,8 | 10,5 | 5,7 | 0,24 | 74,6 | 104 | 54 |
| 95 | 5 | -5 | 74 | 50 | 42 | 1,8 | 10,3 | 5,7 | 0,14 | 74,6 | 102 | 54 |

Résultats en mode chauffage

En mode chauffage, le système à compression fonctionne entre une température d'évaporation de -5°C et une température de condensation de 50°C.

Les valeurs des constituants (HFC-134a, trans HFO-1234ze) pour chaque composition sont données en pourcentage en poids.

| Mode chauffage | | Temp entrée évap (°C) | Temp sortie comp (°C) | T condensation (°C) | T entrée detendeur | evap P (bar) | cond P (bar) | Taux (p/p) | Glide | rendement comp | % CAP | % COP / COPLorenz |
|---|---|---|---|---|---|---|---|---|---|---|---|---|
| HFO-1234ze | | -5 | 73 | 50 | 42 | 1,8 | 10,0 | 5,6 | 0,00 | 74,8 | 100 | 62 |
| HFO-1234ze | HFC-134a | | | | | | | | | | | |
| 5 | 95 | -5 | 81 | 50 | 42 | 2,4 | 13,1 | 5,4 | 0,03 | 75,9 | 136 | 63 |
| 10 | 90 | -5 | 81 | 50 | 42 | 2,4 | 13,0 | 5,4 | 0,07 | 75,8 | 135 | 63 |
| 20 | 80 | -5 | 80 | 50 | 42 | 2,3 | 12,8 | 5,5 | 0,16 | 75,6 | 131 | 63 |
| 30 | 70 | -5 | 79 | 50 | 42 | 2,3 | 12,6 | 5,5 | 0,26 | 75,3 | 128 | 63 |
| 40 | 60 | -5 | 79 | 50 | 42 | 2,2 | 12,3 | 5,6 | 0,34 | 75,1 | 124 | 62 |
| 50 | 50 | -5 | 78 | 50 | 42 | 2,1 | 12,0 | 5,6 | 0,40 | 74,9 | 120 | 62 |
| 60 | 40 | -5 | 78 | 50 | 42 | 2,1 | 11,7 | 5,7 | 0,44 | 74,7 | 116 | 62 |
| 70 | 30 | -5 | 77 | 50 | 42 | 2,0 | 11,3 | 5,7 | 0,43 | 74,6 | 112 | 62 |
| 80 | 20 | -5 | 76 | 50 | 42 | 1,9 | 10,9 | 5,7 | 0,37 | 74,5 | 108 | 62 |
| 90 | 10 | -5 | 75 | 50 | 42 | 1,8 | 10,5 | 5,7 | 0,24 | 74,6 | 104 | 62 |
| 95 | 5 | -5 | 74 | 50 | 42 | 1,8 | 10,3 | 5,7 | 0,14 | 74,6 | 102 | 62 |

## Revendications

**1.** Composition comprenant au moins un lubrifiant à base d'esters de polyol (POE) ou PVE et un fluide frigorigène F comprenant de 1 à 99 % en poids du trans-1,3,3,3-tetrafluoropropène (trans HFO-1234ze) et de 1 à 99 % en poids du 1,1,1,3-tetrafluoroéthane.

**2.** Composition selon la revendication 1 **caractérisée en ce que** le fluide frigorigène F comprenant de 5 à 95 % en poids du trans-1,3,3,3-tetrafluoropropène (trans HFO-1234ze) et de 5 à 95 % en poids du 1,1,1,3-tetrafluoroéthane.

**3.** Composition selon la revendication 1 ou 2 **caractérisée en ce que** le fluide frigorigène F comprenant de 30 à 91 % en poids du trans-1,3,3,3-tetrafluoropropène (trans HFO-1234ze) et de 9 à 70 % en poids du 1,1,1,3-tetrafluoroéthane.

**4.** Composition selon l'une quelconque des revendications 1 à 3 **caractérisée en ce que** les POE sont obtenus à partir de polyols ayant un squelette de néopentyle comme le néopentyle glycol, le triméthylol propane, le pentaerythritol et le dipentaerythritol.

**5.** Composition selon l'une quelconque des revendications 1 à 4 **caractérisée en ce que** les POE sont obtenus à partir d'acide carboxylique ayant de 2 à 15 atomes de carbone, linéaire ou ramifié.

**6.** Composition selon l'une quelconque des revendications 1 à 5 **caractérisée en ce que** le(s) POE représente(nt) entre 10 et 50 % en poids de la composition.

**7.** Utilisation de la composition selon l'une quelconque de la revendication 1 à 6 en réfrigération, climatisation et pompe à chaleur.

Europäisches Patentamt
European Patent Office
Office européen des brevets

# RAPPORT DE RECHERCHE EUROPEENNE

Numéro de la demande
EP 18 17 0764

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2006/243944 A1 (MINOR BARBARA H [US] ET AL) 2 novembre 2006 (2006-11-02)<br>* alinéa [0003]; revendication 40 *<br>----- | 1-7 | INV.<br>C09K5/04<br>C10M171/00 |
| A,D | WO 2005/108522 A1 (HONEYWELL INT INC [US]; SINGH RAJIV R [US]; PHAM HANG T [US]; HERENA L) 17 novembre 2005 (2005-11-17)<br>* page 9, ligne 10 - page 10, ligne 4 *<br>* page 13, ligne 4 - page 14, ligne 18 *<br>* page 14, ligne 28 - page 16, ligne 19 *<br>* revendications 1-6,22-24 *<br>----- | 1-7 | |
| A | US 2008/111099 A1 (SINGH RAJIV R [US] ET AL) 15 mai 2008 (2008-05-15)<br>* revendications 1,13,25 *<br>----- | 1-7 | |

DOMAINES TECHNIQUES RECHERCHES (IPC)

C09K
C10M

Le présent rapport a été établi pour toutes les revendications

1

| Lieu de la recherche | Date d'achèvement de la recherche | Examinateur |
|---|---|---|
| La Haye | 6 septembre 2018 | Puetz, Christine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 18 17 0764

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-09-2018

| Document brevet cité au rapport de recherche | Date de publication | Membre(s) de la famille de brevet(s) | Date de publication |
|---|---|---|---|
| US 2006243944 A1 | 02-11-2006 | AR 053689 A1 | 16-05-2007 |
| | | AR 087396 A2 | 19-03-2014 |
| | | AR 087397 A2 | 19-03-2014 |
| | | AR 087398 A2 | 19-03-2014 |
| | | AR 087399 A2 | 19-03-2014 |
| | | AU 2006218376 A1 | 08-09-2006 |
| | | BR PI0607994 A2 | 03-11-2009 |
| | | CA 2600319 A1 | 08-09-2006 |
| | | CA 2922169 A1 | 08-09-2006 |
| | | CA 2930803 A1 | 08-09-2006 |
| | | CA 3011127 A1 | 08-09-2006 |
| | | CA 3011132 A1 | 08-09-2006 |
| | | CA 3011137 A1 | 08-09-2006 |
| | | CN 105219350 A | 06-01-2016 |
| | | JP 5001181 B2 | 15-08-2012 |
| | | JP 2008531836 A | 14-08-2008 |
| | | KR 20070121708 A | 27-12-2007 |
| | | KR 20130006510 A | 16-01-2013 |
| | | MY 143264 A | 15-04-2011 |
| | | MY 151951 A | 31-07-2014 |
| | | MY 152930 A | 15-12-2014 |
| | | MY 164609 A | 30-01-2018 |
| | | MY 165102 A | 28-02-2018 |
| | | SG 169352 A1 | 30-03-2011 |
| | | US 2006243944 A1 | 02-11-2006 |
| | | WO 2006094303 A2 | 08-09-2006 |
| WO 2005108522 A1 | 17-11-2005 | AR 050328 A1 | 18-10-2006 |
| | | AU 2005241031 A1 | 17-11-2005 |
| | | BR PI0510386 A | 13-11-2007 |
| | | CA 2564768 A1 | 17-11-2005 |
| | | CN 1977025 A | 06-06-2007 |
| | | CN 103396766 A | 20-11-2013 |
| | | CN 105567172 A | 11-05-2016 |
| | | CN 105623615 A | 01-06-2016 |
| | | DK 1751245 T3 | 27-04-2015 |
| | | EP 1751245 A1 | 14-02-2007 |
| | | EP 2264117 A2 | 22-12-2010 |
| | | EP 2942381 A1 | 11-11-2015 |
| | | ES 2533696 T3 | 14-04-2015 |
| | | JP 5436775 B2 | 05-03-2014 |
| | | JP 2007538115 A | 27-12-2007 |
| | | JP 2012092348 A | 17-05-2012 |
| | | KR 20070020474 A | 21-02-2007 |
| | | KR 20120059654 A | 08-06-2012 |
| | | KR 20130042613 A | 26-04-2013 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE RELATIF A LA DEMANDE DE BREVET EUROPEEN NO.** EP 18 17 0764

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-09-2018

| Document brevet cité au rapport de recherche | Date de publication | Membre(s) de la famille de brevet(s) | Date de publication |
|---|---|---|---|
| | | MX 347450 B | 27-04-2017 |
| | | MY 148431 A | 30-04-2013 |
| | | PT 1751245 E | 16-04-2015 |
| | | TW I405845 B | 21-08-2013 |
| | | TW 201235457 A | 01-09-2012 |
| | | TW 201437188 A | 01-10-2014 |
| | | TW 201604172 A | 01-02-2016 |
| | | TW 201716361 A | 16-05-2017 |
| | | TW 201813949 A | 16-04-2018 |
| | | US 2005245421 A1 | 03-11-2005 |
| | | US 2005247905 A1 | 10-11-2005 |
| | | US 2008308763 A1 | 18-12-2008 |
| | | US 2009285764 A1 | 19-11-2009 |
| | | US 2012187331 A1 | 26-07-2012 |
| | | US 2014077124 A1 | 20-03-2014 |
| | | US 2015065585 A1 | 05-03-2015 |
| | | US 2017081576 A1 | 23-03-2017 |
| | | WO 2005108522 A1 | 17-11-2005 |
| US 2008111099 A1 | 15-05-2008 | US 2008111099 A1 | 15-05-2008 |
| | | WO 2008061072 A2 | 22-05-2008 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 4110388 A
- WO 2004037913 A
- WO 2005108522 A


### Littérature non-brevet citée dans la description


- l'ASHRAE Handbook. 2005